# EUROPÄISCHE PATENTSCHRIFT

(11) **EP 0 426 947 B1**
(45) Veröffentlichungstag und Bekanntmachung des Hinweises auf die Patenterteilung: **24.02.1993**
(21) Anmeldenummer: 90111982.6
(22) Anmeldetag: 25.06.1990
(51) Int. Cl.: G02C 5/22

(54) **Federscharnier für Brillen**
Resilient hinge for spectacles
Charnière élastique pour lunettes

(30) Priorität: 04.11.1989 DE 3936725; 14.03.1990 DE 4008086
(43) Veröffentlichungstag der Anmeldung: 15.05.1991
(73) Patentinhaber: OBE-Werk Ohnmacht & Baumgärtner GmbH & Co. KG, 75228 Ispringen (DE)
(72) Erfinder: Drlik, Günther, D-7530 Pforzheim 8 (DE)
(74) Vertreter: Gleiss & Grosse

(56) Entgegenhaltungen:
- EP-A- 0 149 230
- EP-A- 0 166 822
- EP-A- 0 191 944
- EP-A- 0 308 533

## Beschreibung

Die Erfindung betrifft ein Federscharnier für Brillen zum Überdrücken des Brillenbügels über die Anschlagstellung hinaus zur federnden Anlage am Kopf des Trägers entsprechend dem Oberbegriff von Anspruch 1 mit möglichem Schnappeffekt zwischen Ruhe- und Offenstellung.

Es sind solche Federscharniere, bestehend aus gelenkig miteinander verbundenen Bügel- und Mittelteilscharnieren bekannt, bei welchen das Bügelscharnier mit Schieberteil zur Federaufnahme im Führungsgehäuse gegen Federwirkung ausziehbar angeordnet ist und hierbei ein einbringbarer Sperrkörper als Federanschlag dient.

Hierbei finden beispielsweise nach der DE-PS 21 15 596 Sperrkörper mit Verschraubung im Führungsboden oder nach der DE-PS 22 42 044 Sperrkörper mit Rastkugel als Federanschlag Verwendung. Dabei muß beim Einbringen des Sperrkörpers in seine Funktionsstellung entweder die kleine Schraube zwischen den Scharnieraugen hindurch eingeschraubt werden oder die kleine Kugel zur Selbstverrastung eingebracht werden. Wenn man die Kleinheit dieser Teile bedenkt, so bedingen der Einbau dieser Sperrkörper manuelle Geschicklichkeit. Desweiteren ist nach der DE-PS 22 38 730 ein Endklötzchen als Sperrkörper bekannt, welches zur Verankerung mittels Stutzen in ein Sackloch am Führungsboden reicht. Auch dies erfordert besonderes Geschick beim Einbringen.

Bei der Scharnierausbildung nach der DE-OS 32 13 174 sind zur Verriegelung wenigstens zwei Arbeitsgänge erforderlich. Auch läßt sich diese Federscharnier-Ausführung ebenso wie diejenigen nach der DE-OS 29 20 055 und DE-OS 34 01 213 nicht im vormontierbaren Zustand mit eingesetztem Sperrkörper an Brillenhersteller zum einfachen Zusammenbau liefern.

Es ist hiergegen Aufgabe der Erfindung für Federscharniere ein mitsamt Federkolben, Feder und Sperrkörper vormontierbares an einer Aufnahme am Bügelende einzubringendes und zu verrastendes Schieberteil zu schaffen, wobei das Brillenscharnier sich auch zur Erzeugung eines Schnappeffekts eignet.

Zur Lösung dieser Aufgabe kennzeichnet sich das Federscharnier nach dem Oberbegriff von Anspruch 1 entsprechend dem kennzeichnenden Teil von Anspruch 1.

Hierbei besitzt der Sperrkörper als Quader in ovalrunder Draufsicht und rhombischen Querschnitt abgerundete Stellflächen und bewirkt mit zwei parallelen Rhomboidflächen (Schrägflächen) unter Federwirkung die Verrastung. Die Federaufnahme im Schieberteil ist als Langloch zum Einbringen des Sperrkörpers mit Federkolben und Feder zur Vormontage ausgeführt.

Nach einem weiteren Gedanken der Erfindung erscheint der quaderförmige Sperrkörper in Draufsicht als Rechteck mit angesetztem Halbkreis, wobei die ebene Schrägfläche an der Kolbenfläche des Federkolbens zur Anlage kommt, während die abgerundete Schrägfläche mit Spitzenteil zur Verrastung in einer Ausnehmung am Führungsgehäuse dient. Hierdurch wird infolge der vollen Anlage der ebenen Schrägflächen an der ebenfalls ebenen Kolbenfläche, welcher Kolben zylindrisch oder auch quaderförmig ausgebildet sein kann, für die Schrägstellung des Sperrkörpers zur Verriegelung unter voller Federkraft bei guter Führung erreicht.

Desweiteren ist es vorteilhaft, daß der Sperrkörper wenig schmäler als die Langloch-Aufnahme im Schieberteil ist, so daß die runde Schrägfläche zum leichten Hochstellen beim Einbringen nur an einer zum Spitzenteil hochlaufenden Mantellinie anliegt. Hierdurch wird eine Seitenreibung bei der Hochstellung des Sperrkörpers unter Federwirkung unabhängig von Toleranzen sicher vermieden und es verbleibt lediglich die Reibung entlang der anliegenden hochlaufenden Mantellinie der runden Schrägfläche.

Schließlich kann der Sperrkörper als Quader beidseits zur an der Kolbenfläche des Federkolbens anliegenden Schrägfläche folgend zwei nach außen wenig vorsehende Schultern zur hängenden Zuführung bei automatischer Verarbeitung aufweisen, wodurch sich das Zusammensetzen der einzelnen Teile zur vorgefertigten Einbaueinheit dieses Brillenscharniers automatisieren läßt.

In der Zeichnung sind zwei bevorzugte Ausführungsformen des Federscharniers für Brillen gemäß der Erfindung dargestellt und nachfolgend beschrieben und zwar zeigen:
- Figur 1: die perspektivische Ansicht eines ersten Ausführungsbeispiels des Bügelendes mit Führungsgehäuse für das Schieberteil des Bügelscharniers,
- Figur 2: die perspektivische Ansicht des Bügelscharnierauges mit Schieberteil als Federaufnahme mit Sperrkörper, Federkolben und Feder,
- Figur 3: die perspektivische Ansicht des Mittelteilscharniers mit Schnappnocken und Scharnierschraube,
- Figur 4 + 5: den Mittel- und Längsschnitt durch das Federscharnier mit Bügelende sowie Bügel- und Mittelteilscharnier in Offenstellung,
- Figur 6 + 7: den Mittelschnitt nach Figur 4 in Überdruck- und Schnappstellung
- Figur 8 - 10: den Mittelschnitt durch einen Ausschnitt des Federscharniers beim Einrasten des Sperrkörpers,
- Figur 11: die perspektivische Ansicht eines zweiten Ausführungsbeispiels des Bügelendes mit Führungsgehäuse für das Schieberteil vom Bügelscharnier,
- Figur 12: die perspektivische Ansicht des Bügelscharnierauges mit Schieberteil als Federaufnahme mit Sperrkörper, Federkolben und Feder,
- Figur 13: die perspektivische Ansicht des Mittelteilscharniers mit Schnappnocken und Scharnierschraube, sowie
- Figur 14: die perspektivische Darstellung des gegenüber dem ersten Ausführungsbeispiel in vorteilhafter Weise weitergebildeten Sperrkörpers.

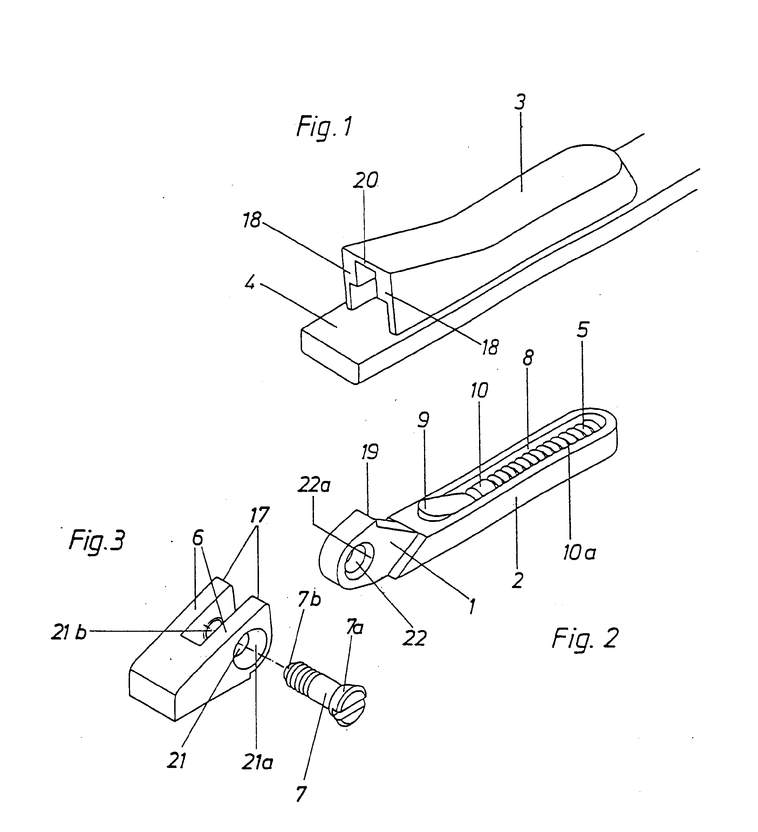

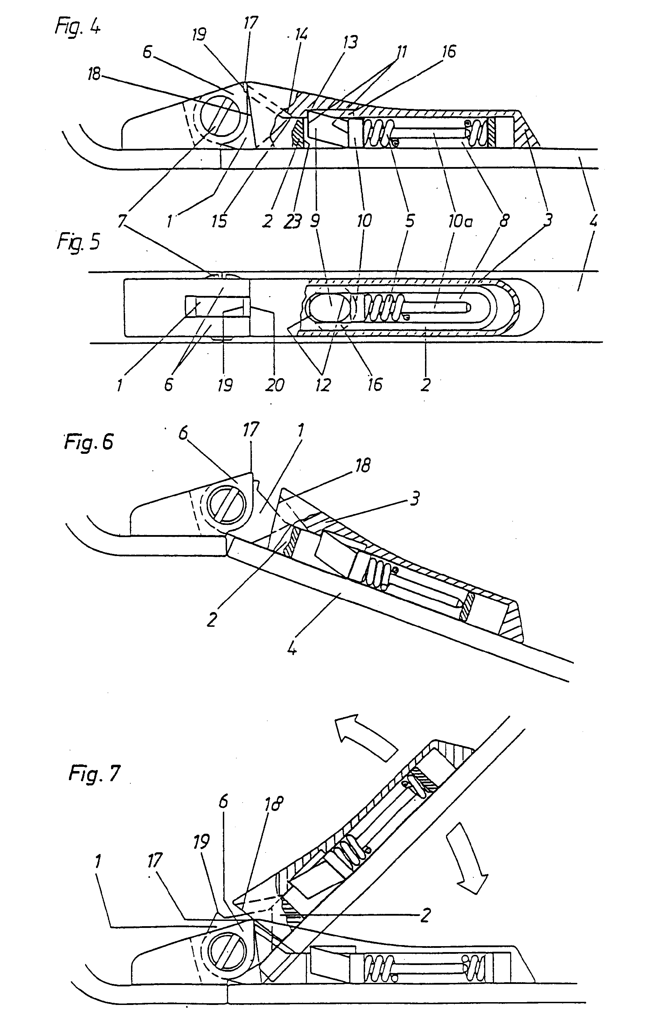

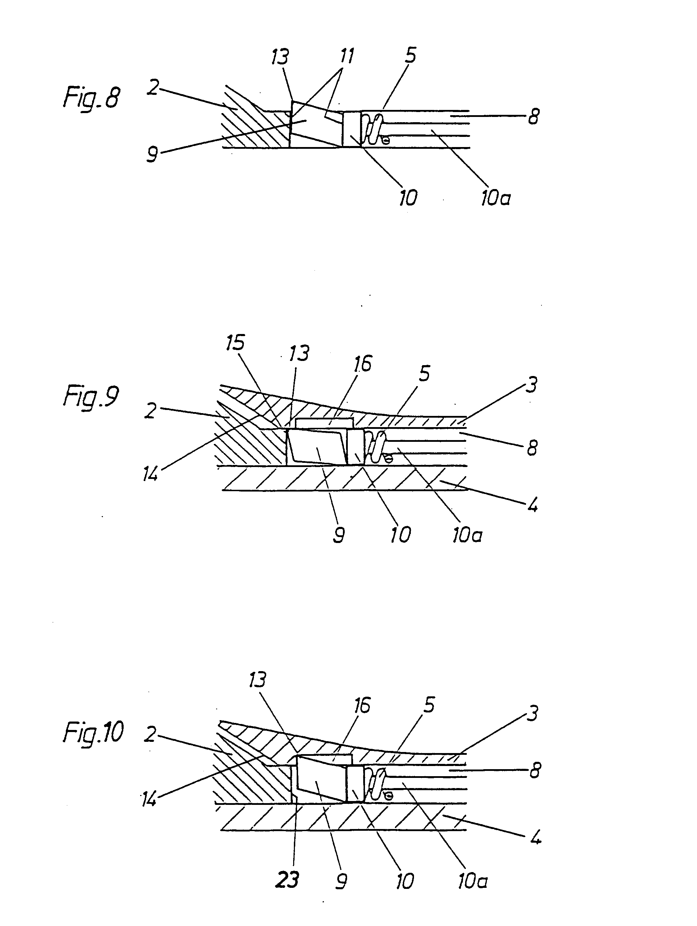

Wie aus der Zeichnung in Figur 1 bis 10 gemäß dem ersten Ausführungsbeispiel ersichtlich wird, besteht das Federscharnier für Brillen einerseits aus dem Bügelscharnierauge 1 mit Schieberteil 2, welcher im Führungsgehäuse 3 am Bügelende 4 gegen Wirkung der Feder 5 ausziehbar ist, sowie andererseits aus den Mittelteilscharnieraugen 6, welche Scharnieraugen (1 und 6) mittels Scharnierschraube 7 gelenkig verbunden werden. Hierbei ist bei Metallbügeln das Führungsgehäuse 3 am Bügelende 4 aufgelötet oder bei Kunststoffbügeln an deren Bügeleinlage. In der Federaufnahme in Form eines Langlochs 8 im Schieberteil 2 wird zur Vormontage der Sperrkörper 9 und Federkolben 10 mit Kolbenstange 10a und Feder 5 nach Figur 2 als Einbaueinheit eingebracht, welche sodann im Führungsgehäuse 3 am Bügelende 4 nach Figur 1 einzuschieben und die Scharnieraugen 1 und 6 nach Figur 2 und 3 mittels Scharnierschraube 7 zu verbinden sind. Der Sperrkörper 9 besitzt hier die Form eines Quaders mit beidseitig schrägen Endflächen 11 als Rhomboid und runden Stellflächen 12, so daß sich eine ovalrunde Draufsicht und ein rhombischer Querschnitt entsprechend den Figuren 4 und 5 ergeben. Der im Langloch 8 als Federaufnahme am Schieberteil 2 vormontierte Sperrkörper 9 wird mit seinem Spitzenteil 13 durch die Schräge 14 gegen Wirkung der Feder 5 beim Einbringen im Führungsgehäuse 3 in die Führungsebene 15 gedrückt und schnappt beim Erreichen der Ausnehmung 16 in dieselbe ein, wie dies in Figur 8 bis 10 ersichtlich ist.

In der verriegelten Stellung entsprechend Figur 4 wird das bei Federscharnieren bekannte Überdrücken von der Normaloffenstellung in die Überdrückstellung zum Aufsetzen der Brille entsprechend Figur 6 mit anschließend federnder Anlage am Kopf des Trägers ermöglicht. Hierbei werden das Bügelscharnierauge 1 mit dem Schieberteil 2 aus dem Führungsgehäuse 3 am Bügelende 4 bei feststehenden Mittelteilscharnieraugen 6 ausgezogen.

Das Führungsgehäuse 3 weist auf der Öffnungsseite zur verbesserten Schnappführung der Nocken 17 an den Mittelteilscharnieraugen 6 nach innen geschrägte Endschultern 18 auf, wodurch beim Übergang von der Ruhe- in die Offenstellung und umgekehrt ein Schnappeffekt entsteht, wie sich dies aus Figur 7 ergibt.

Das Bügelscharnierauge 1 am ausziehbaren Schieberteil 2 besitzt hier eine Nase 19, welche als Anschlag beim Einbringen des Schieberteils 2 im Führungsgehäuse 3 bei der Fertigmontage an dessen Endsteg 20 zur Beendigung der Verriegelung bei etwas Überweg dient.

Von den Bohrungen 21 in den Mittelteilscharnieraugen 6 für die Scharnierschraube 7 ist die eine bei 21a konisch angeschnitten für den entsprechend gegenkonischen Schraubenkopf 7a, nach dem DE-GM 89 04 802.4, die zweite weist bei 21b das Schraubgewinde auf. Die Bohrung 22 im Bügelscharnierauge 1 für die Scharnierschraube 7 ist beidseits zur Verwendung für das linke und rechte Brillenscharnier bei 22a trichterförmig angesenkt zum Einbringen des entsprechend angeschrägten Schraubenendes 7b derselben (7) unter Zentrierung mit den zunächst nicht fluchtenden Mittelteilscharnierschrauben 6 zur Erzeugung einer Vorspannung des etwas aus der Aufnahme im Führungsgehäuse 3 herausgezogenen Schieberteils 2 gegenüber dem Gehäuse 3 zum Spielausgleich bei eingeschnapptem Sperrkörper 9 unter Bildung eines Spaltes 23.

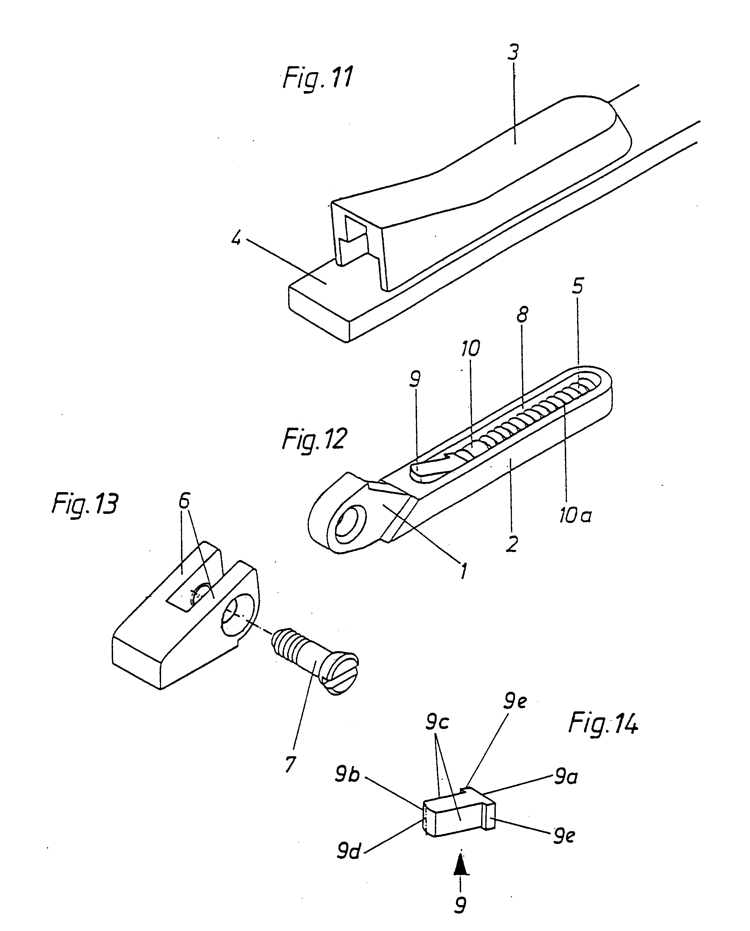

Wie aus der Zeichnung in Figur 11 bis 14 gemäß dem zweiten Ausführungsbeispiel ersichtlich wird, besteht das Federscharnier für Brillen ebenfalls einerseits aus dem Bügelscharnierauge 1 mit Schieberteil 2, welcher im Führungsgehäuse 3 am Bügelende 4 gegen Wirkung der Feder 5 ausziehbar ist, sowie andererseits aus den Mittelteilscharnieraugen 6, welche Scharnieraugen (1 und 6) mittels Scharnierschraube 7 gelenkig verbunden werden. Hierbei ist bei Metallbügeln das Führungsgehäuse 3 am Bügelende 4 aufgelötet oder bei Kunststoffbügeln an deren Bügeleinlage. In der Federaufnahme in Form eines Langlochs 8 im Schieberteil 2 wird zur Vormontage der Sperrkörper 9 und Federkolben 10 mit Kolbenstange 10a und Feder 5 nach Figur 12 als Einbaueinheit eingebracht, welche sodann im Führungsgehäuse 3 am Bügelende 4 nach Figur 1 einzuschieben und die Scharnieraugen 1 und 6 nach Figur 12 und 13 mittels Scharnierschraube 7 zu verbinden sind.

Der Sperrkörper 9 erscheint hier, wie aus Figur 14 im einzelnen ersichtlich, als Quader in Draufsicht als Rechteck mit angesetztem Halbkreis, wobei die ebene Schrägfläche 9a an der Kolbenfläche des Federkolbens 10 zur Anlage kommt, welcher Kolben 10 zylindrisch oder auch quaderförmig ausgebildet sein kann. Die abgerundete Schrägfläche 9b stellt sich mit dem Spitzenteil entsprechend dem ersten Ausführungsbeispiel beim Einschieben zur Verrastung in einer Ausnehmung am Führungsgehäuse 3, wie hier nicht nochmals dargestellt, hoch. Im übrigen ist der Sperrkörper 9 beidseits bei 9c etwas schmäler als die Langlochaufnahme 8, so daß eine Seitenreibung bei gegebener Toleranz vermieden wird und der Spitzenteil nur an der hochlaufenden Mantellinie 9d anliegt. Desweiteren besitzt der Sperrkörper 9 zwei seitwärts wenig vorsehende Schultern 9e zur hängenden Zuführung bei automatischer Verarbeitung, wie eingangs beschrieben.

## Patentansprüche

1. Federscharnier für Brillen, welches das Öffnen des Brillenbügels über die normale Tragestellung hinaus erlaubt, und welches für die Verwendung mit einem Brillenbügel vorgesehen ist, an dessen, im montierten Zustand dem Mittelteil zugewandten Ende sich ein langgestrecktes Führungsgehäuse (3) mit einer an diesem Ende befindlichen stirnseitigen Öffnung befindet, welche eine nach außen erweiterte Abschrägung (14) und daran anschließend an einer Innenfläche des Führungsgehäuses eine Ausnehmung (16) aufweist, die an ihrem vorderen Ende stufenförmig in de Abschrägung übergeht,
wobei das Federscharnier besteht aus:
einerseits einem Mittelteilscharnier (6), welches zur Befestigung am Mittelteil einer Brillenfassung vorgesehen ist, und andererseits einem Bügelscharnier, welches mit dem Mittelteilscharnier um eine Scharnierachse schwenkbar verbunden werden kann, und welches
eine Schraubenfeder (5), einen Federkolben (10), einen Sperrkörper (9) und ein Schieberteil (2) umfaßt, welches die Schraubenfeder (5), den Federkolben (10) und den Sperrkörper (9) so aufnimmt, daß sich der Sperrkörper näher an der Scharnierachse befindet als die Schraubenfeder und durch die Wirkung der Schraubenfeder in Richtung Scharnierachse gedrückt wird,
wobei das Schieberteil (2) mit Schraubenfeder, Federkolben und Sperrkörper im Führungsgehäuse gegen die Wirkung der Schraubenfeder um eine vorgegebene Strecke ausziehbar angeordnet werden kann,
dadurch gekennzeichnet,
daß der Sperrkörper (9) und die Fläche des Schieberteils, an die er durch die Wirkung der Schraubenfeder angedrückt wird, so ausgebildet sind, daß das der Scharnierachse zugewandte Ende des Sperrkörpers durch die Wirkung der Schraubenfeder aus dem Schieberteil herausgedrückt wird und dieses überragt,
und daß beim Einführen des Schieberteils (2) in das Führungsgehäuse (3) dieses Ende des Sperrkörpers (9) zunächst durch die Abschrägung (9) in das Schieberteil (2) hineingedrückt wird und dann in der Ausnehmung (16) an der Innenseite des Führungsgehäuses (3) am stufenförmigen Übergang einschnappt, sodaß der Sperrkörper als Anschlag für den Federkolben (10) im Führungsgehäuse fixiert ist.

2. Federscharnier nach Anspruch 1, dadurch gekennzeichnet, daß der Querschnitt des Sperrkörpers (9) in montiertem Zustand in Richtung normal zur Scharnierachse und normal zur Längsrichtung der Schraubenfeder gesehen ein Oval und daß der Querschnitt des Sperrkörpers in Richtung der Scharnierachse betrachtet im wesentlichen ein Parallelogramm darstellt.

3. Federscharnier nach Anspruch 1 oder 2, dadurch gekennzeichnet, daß das Schieberteil zur Aufnahme von Schraubenfeder, Federkolben und Sperrkörper ein Langloch (8) aufweist.

4. Federscharnier nach Anspruch 3, welches für die Verwendung mit einem Führungsgehäuse vorgesehen ist, das an der Öffnung nach innen abgeschrägte Stirnflächen (18) aufweist, dadurch gekennzeichnet, daß die beiden Scharnieraugen (6) des Mittelteilscharniers Nocken (17) aufweisen, die im montierten Zustand des Scharniers mit den Stirnflächen (18) an der Öffnung des Führungsgehäuses beim Öffnen und Schließen des Brillenbügels derart zusammenwirken, daß, wenn der Brillenbügel in eine Stellung gebracht wird, die sich zwischen der geschlossenen Stellung und der normalen Tragestellung befindet, die Schraubenfeder komprimiert wird und nach dem Auslassen des Bügels ein Einschnappen in eine der beiden Stellungen bewirkt.

5. Federscharnier nach einem der vorhergehenden Ansprüche, welches für die Verwendung mit einem Führungsgehäuse vorgesehen ist, das an der Öffnung eine Stirnfläche (20) aufweist, dadurch gekennzeichnet, daß das Bügelscharnier ein Scharnierauge (1) mit einer Nase (19) aufweist, die zusammen mit der Stirnfläche (20) des Führungsgehäuses an dessen Öffnung beim Einschieben des Schieberteils in das Führungsgehäuse als Begrenzung dieser Einschubbewegung vorgesehen ist.

6. Federscharnier nach einem der vorhergehenden Ansprüche, dadurch gekennzeichnet, daß die Bohrung (21) des Scharnierauges (1) am Schieberteil trichterförmig (21a) angesenkt ist, sodaß das Einführen der Scharnierschraube (7) eine Zentrierung des Scharniers bewirkt, und daß Schieberteil, Führungsgehäuse und Schraubenfeder so bemessen sind, daß im Zuge dieser Zentrierung die Schraubenfeder vorgespannt wird.

7. Federscharnier nach einem der Ansprüche 3-6 , dadurch gekennzeichnet, daß die bestimmte Strecke, um die das Schieberteil aus dem Führungsgehäuse herausgezogen werden kann, durch die Länge der Kolbenstange (10a) des Federkolbens (10) vorgegeben wird, der, sobald das Schieberteil um diese Strecke aus dem Führungsgehäuse herausgezogen ist, am der Scharnierachse entfernt liegenden Ende des Langlochs anschlägt.

8. Federscharnier nach Anspruch 1, dadurch gekennzeichnet, daß der Querschnitt des Sperrkörpers (9) in Richtung normal zur Scharnierachse und normal zur Längsrichtung der Spiralfeder gesehen als Rechteck mit angesetztem Halbkreis erscheint, wobei der Sperrkörper bei der Montage derart orientiert wird, daß der Halbkreis der Scharnierachse zugewandt ist.

9. Federscharnier nach Anspruch 3 oder nach den Ansprüchen 3 und 8, dadurch gekennzeichnet, daß die Fläche (23) am vorderen Ende des Langlochs abgerundet ist und der Radius dieser Rundung derart gewählt ist, daß der Sperrkörper nur entlang einer Linie an dieser Fläche anliegt.

10. Federscharnier nach Anspruch 8, dadurch gekennzeichnet, daß der Sperrkörper (9) an seinem im montierten Zustand von der Scharnierachse abgewandten Ende seitlich zwei Schultern (9e) aufweist.

## Claims

1. A spring hinge for eyeglasses, which hinge permits the eyeglass bow to be opened beyond the normal position for wearing the eyeglasses, and is intended for use with an eyeglass bow which at that end that faces the rim when the bow is assembled is provided with an elongate guide housing (3), which at that end has in its end face an opening, which has an outwardly flaring bevelled surface (14) and on an inside surface of the guide housing has a recess (16), which adjoins the bevelled surface and which at its forward end merges in a step into the bevelled surface,
wherein the spring hinge consists of
rim-side hinge means (6), which are intended to be secured to the rim of an eyeglass frame, and bow-side hinge means, which are adapted to be pivoted to the rim-side hinge member on a hinge axis and which
comprise a coil spring (5), a spring piston (10), a locking member (9) and a slider (2), which receives the coil spring (5), the spring piston (10) and the locking member (9) in such a manner that the locking member is closer to the hinge axis than the coil spring and by the action of the coil spring is urged towards the hinge axis,
wherein the slider (2) with the coil spring, spring piston and locking member is adapted to be arranged in the guide housing to be extractable over a predetermined distance against the action of the coil spring,
characterized in that
the locking member (9) and that surface of the slider against which the locking member is forced by the action of the coil spring are so designed that that end of the locking member which faces the hinge axis is forced out of the slider by the action of the compressed coil spring and protrudes from the slider,
and that during the insertion of the slider (2) into the guide housing (9) that end of the locking member (9) is initially forced into the slider (2) by the bevelled surface (9) and then snaps in at the step-shaped transition in the recess (16) on the inside surface of the guide housing (3) so that the locking member is fixed in the guide housing to constitute a stop for the spring piston (10).

2. A spring hinge according to claim 1, characterized in that when the locking member (9) has been mounted its cross-section viewed in the direction which is normal to the hinge axis and normal to the longitudinal direction of the coil spring is an oval and the cross-section of the locking member viewed in the direction of the hinge axis is substantially a parallelo-gram.

3. A spring hinge according to claim 1 or 2, characterized in that the slider has a slot (8) for receiving the coil spring, spring piston and locking member.

4. A spring hinge according to claim 3, which is intended for use with a guide housing which at its opening has inwardly bevelled end faces (18), characterized in that the two hinge eyes (6) of the rim-side hinge means comprise cams (17), which when the hinge has been assembled cooperate with the end faces (18) at the opening of the guide housing during the opening and closing of the eyeglass bow in such a manner that when the eyeglass bow is moved to a position which is between its closed position and its normal wearing position the coil spring is compressed and when the bow is released the coil spring causes the bow to snap into either of said two positions.

5. A spring hinge according to any of the preceding claims, which is intended for use with a guide housing that has an end face (20) at its opening, characterized in that the rim-side hinge means comprise a hinge eye (1) that has a nose (19), which together with the end face (20) of the guide housing at its opening are arranged to limit the movement by which the slider is inserted into the guide housing.

6. A spring hinge according to any of the preceding claims, characterized in that the bore (21) of the hinge eye (1) provided on the slider is countersunk in funnel-shape (21a) so that the hinge is centred as the hinge screw (7) is inserted, and that the slider, guide housing and coil spring are so dimensioned that the coil spring is prestressed in the course of said centring.

7. A spring hinge according to any of claims 3 to 6, characterized in that the certain distance over which the slider is adapted to be pulled out of the guide housing is determined by the length of the piston rod (10a) of the spring piston (10) and as soon as the slider has been pulled out of the guide housing by that distance the spring piston engages that end of the slot which is remote from the hinge axis.

8. A spring hinge according to claim 1, characterized in that the cross-section of the locking member (9) when viewed in the direction which is not normal to the hinge axis and normal to the longitudinal direction of the coil spring as a rectangle and adjoined by a semicircle and during the assembling the locking member is oriented so that the semicircle faces the hinge axis.

9. A spring hinge according to claim 3 or according to claims 3 and 8, characterized in that the surface (23) is rounded at the forward end of the slot and the radius of said rounded surface is so selected that the locking member contacts said surface only along a line.

10. A spring hinge according to claim 8, characterized in that the locking member (9) is provided with two laterally disposed shoulders (9e) at that end which faces away from the hinge axis when the locking member (9) has been mounted.

## Revendications

1. Charnière élastique pour lunettes, permettant d'opérer l'ouverture de la branche de lunette au-delà de la position de port normale, et prévue pour l'utilisation avec une branche de lunettes, sur l'extrémité, associée à la partie médiane à l'état montée, de laquelle se trouve un carter de guidage allongé (3), avec une ouverture frontale, se trouvant à une extrémité, qui présente un chanfrein (14) allant en s'élargissant vers l'extérieur et, auquel est raccordé, sur une surface intérieure du carter de guidage, un évidement (16), qui se transforme à son extrémité avant, par degrés, en le chanfrein, la charnière élastique comprenant :
d'une part une charnière de partie médiane (6), prévue pour assurer la fixation sur la partie médiane d'une monture de lunettes, et; d'autre part, une charnière de branche, pouvant être reliée pivotante à la charnière de partie médiane, autour d'un axe de charnière, et comprenant un ressort spiral (5), un piston à ressort (10), un corps de blocage (9) et une partie de curseur-(2), qui loge le ressort spiral (5), le piston à ressort (10) et le corps de blocage (9) de telle façon que le corps de blocage se trouve plus près de l'axe de charnière que l'est le ressort spiral et est pressé par l'action du ressort spiral, en direction de l'axe de charnière,
où la partie de charnière (2) comportant le ressort spiral, le piston à ressort et le corps de blocage, peut être disposée dans le carter de guidage, de façon à pouvoir être extraite d'une distance prédéterminée, à l'encontre de l'action du ressort spiral,
caractérisée en ce que
le corps de blocage (9) et la face de la partie de curseur, sur laquelle il est pressé au moyen de l'action du ressort spiral, sont réalisés de telle façon que l'extrémité, tournée vers l'axe de charnière, du corps de blocage est poussée au dehors de la partie de curseur par l'action du ressort spiral comprimé et fait saillie hors de celle-ci,
et en ce que, lors de l'introduction de la partie de curseur (2) dans le carter de guidage (3), cette extrémité du corps de blocage (9) est d'abord enfoncée par le chanfrein (9) dans la partie de curseur (2) puis vient s'encliqueter dans l'évidement (16) sur la face intérieure du carter de guidage (3), en une transition étagée, de sorte que le corps de blocage est fixé dans le carter de guidage, à titre de butée pour le piston (10).

2. Charnière élastique selon la revendication 1, caractérisée en ce que la section transversale du corps de blocage (9), observée à l'état monté, dans une direction perpendiculaire à l'axe de charnière et perpendiculaire à la direction longitudinale du ressort spiral, est un ovale et en ce que la section du corps de blocage, observée dans la direction de l'axe de charnière, constitue pratiquement un parallélogramme.

3. Charnière élastique selon la revendication 1 ou 2, caractérisée en ce que la partie de curseur destinée à loger le ressort spiral, le piston à ressort et le corps de blocage présente un trou allongé (8).

4. Charnière élastique selon la revendication 3, prévue pour l'utilisation avec un carter de guidage qui présente à l'ouverture des faces frontales (18) chanfreinées vers l'intérieur, caractérisée en ce que les deux oeillets de charnière (6) de la charnière de partie médiane (17) présentent des boutons (17) qui coopèrent, à l'état monté de la charnière, avec les faces frontales (18) situées sur l'ouverture du corps de guidage, lors de l'ouverture et de la fermeture de la branche de lunette, de telle façon que lorsque la branche de lunette est placée dans une position se trouvant entre la position de fermeture et la position de port normale, le ressort spiral est comprimé et, une fois la monture relâchée, un encliquetage est provoqué dans l'une des deux positions.

5. Charnière élastique selon l'une des revendications précédentes, prévue pour l'utilisation avec un carter de guidage qui présente à l'ouverture une face frontale (20), caractérisée en ce que la charnière de branche présente un oeillet de charnière (1) avec un ergot (19) prévu, conjointement avec la face frontale (20) du carter de guidage, sur son ouverture, pour servir de limitation à cette course d'insertion lors de l'insertion de la partie de curseur dans le carter de guidage.

6. Charnière élastique selon l'une des revendications précédentes, caractérisée en ce que le perçage (21) de l'oeillet de charnière (1) sur la partie de curseur est creusé en forme d'entonnoir (21a), de sorte que l'insertion de la vis de charnière (7) provoque un centrage de la charnière et en ce que la partie de curseur, le carter de guidage et le ressort spiral sont dimensionnés de telle façon que le ressort spiral soit précontraint au cours de ce centrage.

7. Charnière élastique selon l'une des revendications 3 à 6, caractérisée en ce que la course déterminée, dont la partie de curseur peut être sortie du carter de guidage, est prédéterminée par la longueur de la tige de piston (10a) du piston à ressort (10), qui, dès que la partie de curseur a été sortie de la valeur de cette course hors du carter de guidage, vient en butée sur l'extrémité, éloignée de l'axe de charnière, du trou allongé.

8. Charnière élastique selon la revendication 1, caractérisée en ce que la section transversale du corps de blocage (9), observée en direction perpendiculaire à l'axe de charnière et perpendiculaire à la direction longitudinale du ressort spiral, présente la forme d'un rectangle avec un demi cercle associé, le corps de blocage étant orienté, lors du montage, de telle façon que le demi-cercle est tourné vers l'axe de charnière.

9. Charnière élastique selon la revendication 3 ou selon l'une des revendications 3 et 8, caractérisée en ce que la face (23) de l'extrémité avant du trou allongé est arrondie et le rayon de cet arrondi est choisi tel que le corps de blocage n'appuie cette face que sur une ligne.

10. Charnière élastique selon la revendication 8, caractérisée en ce que le corps de blocage (9) présente latéralement deux épaulements (9e), à son extrémité opposée à l'axe de charnière, à l'état monté.
